# EUROPEAN PATENT APPLICATION

(11) **EP 4 513 730 A1**
(43) Date of publication of application: **26.02.2025**
(21) Application number: 24193908.1
(22) Date of filing: 09.08.2024
(51) Int. Cl.: H02M 1/00, H02M 1/36, H02M 3/335, B60L 53/00, H02J 7/04, H02M 1/32

(54) **CHARGING APPARATUS AND CHARGING PILE**

(30) Priority: 24.08.2023 CN 202311083661
(71) Applicant: Huawei Digital Power Technologies Co., Ltd., Shenzhen, 518043 (CN)
(72) Inventor: YANG, Jin, Shenzhen, 518043 (CN); LIU, Yifan, Shenzhen, 518043 (CN); LIU, Jianning, Shenzhen, 518043 (CN); WU, Xinye, Shenzhen, 518043 (CN)
(74) Representative: Pfenning, Meinig & Partner mbB

(57) **Abstract**

This application provides a charging apparatus and a charging pile. The charging apparatus includes a direct current bus, an AC/DC conversion circuit, a DC/DC conversion circuit, and a pre-charging circuit. The AC/DC conversion circuit and the DC/DC conversion circuit are connected through the direct current bus, and the pre-charging circuit is configured to charge the direct current bus before the AC/DC conversion circuit is turned on. The pre-charging circuit includes a primary-side circuit and a secondary-side circuit, the secondary-side circuit includes a current sampling resistor, and the current sampling resistor is configured to sample a current of the secondary-side circuit. The current sampling resistor in the secondary-side circuit is used to detect a current of the secondary-side circuit in the pre-charging circuit. After a short circuit or overload occurs, a duty cycle of a switching transistor in the pre-charging circuit may be controlled based on a sampled current of the secondary-side circuit, to avoid a problem that the switching transistor fails due to over-temperature caused by an excessively large current flowing through the switching transistor.

## Description

### TECHNICAL FIELD

This application relates to the charging field, and in particular, to a charging apparatus and a charging pile.

### BACKGROUND

A power conversion circuit of a flyback topology structure is widely used in different scenarios because of a simple circuit structure, low costs, high conversion efficiency, and good stability of the power conversion circuit. Most commonly, the power conversion circuit of the flyback topology structure is used in a low-power charging scenario, and mainly completes a related function such as direct current voltage adjustment. However, in some extreme cases, the power conversion circuit of the flyback topology structure also needs to cope with extreme operating conditions such as a short circuit and high-power overload. For example, in a charging system, to reduce current impact during startup, the power conversion circuit of the flyback topology structure is used as a pre-charging circuit. In this scenario, whether the flyback topology structure can effectively cope with the extreme operating conditions such as a short circuit and overload is a key to whether the flyback topology structure is applicable to a current application. When overload occurs currently, a cycle-by-cycle current limiting (eye-by-eye mode, CBC) function of the flyback topology structure is triggered to protect an internal switching transistor in a short period of time. To ensure a charging speed of the pre-charging circuit, a quantity of times the CBC is triggered does not need to be excessively large. Therefore, a threshold of a protection point corresponding to the CBC function is set to a high value . However, in a scenario of repeated overload, long-time overload, or a short circuit, the CBC function is inevitably triggered continuously. In this case, a current flowing through the switching transistor is excessively large, and the switching transistor is prone to fail due to excessively large power consumption and an excessively high temperature rise. In view of this, it is necessary to improve an overload protection function of the pre-charging circuit in a high-power charging scenario, so that the pre-charging circuit is not damaged under various extreme operating conditions.

### SUMMARY

A charging apparatus and a charging pile provided in this application are used to improve an overload protection function in a high-power charging scenario, so that a pre-charging circuit in the charging apparatus is not damaged under various extreme operating conditions.

According to a first aspect, this application provides a charging apparatus, including an AC/DC conversion circuit, a direct current bus, a DC/DC conversion circuit, and a pre-charging circuit. The AC/DC conversion circuit and the DC/DC conversion circuit are connected through the direct current bus, and the pre-charging circuit is configured to charge the direct current bus before the AC/DC conversion circuit is turned on. The pre-charging circuit includes a primary-side circuit and a secondary-side circuit, the secondary-side circuit includes a current sampling resistor, and the current sampling resistor is configured to sample a current of the secondary-side circuit.

The current sampling resistor in the secondary-side circuit is used to detect a current of the secondary-side circuit in the pre-charging circuit. After a short circuit or overload occurs, the current of the secondary-side circuit exceeds a current threshold. Therefore, when the current of the secondary-side circuit exceeds the current threshold, a duty cycle of a switching transistor in the pre-charging circuit may be controlled based on a sampled current of the secondary-side circuit, to avoid a problem that the switching transistor fails due to over-temperature caused by an excessively large current flowing through the switching transistor.

In a possible implementation, the pre-charging circuit further includes a controller, the primary-side circuit includes the switching transistor, and the controller controls the duty cycle of the switching transistor based on a current of the switching transistor of the primary-side circuit, the sampled current of the secondary-side circuit, and an output voltage of the secondary-side circuit.

The controller in the charging apparatus provided in this application may control the duty cycle of the switching transistor based on the current of the switching transistor of the primary-side circuit, the sampled current of the secondary-side circuit, and the output voltage of the secondary-side circuit. In this way, after a short circuit or overload occurs, the controller reduces the duty cycle of the switching transistor, so that a current flowing through the switching transistor can be reduced, thereby avoiding a failure of the switching transistor due to over-temperature.

In a possible implementation, when the current of the switching transistor of the primary-side circuit is greater than a first current threshold, the controller is configured to reduce a current duty cycle of the switching transistor. After a short circuit or overload occurs, each time the current of the switching transistor of the primary-side circuit is greater than the first current threshold, the controller may reduce the current duty cycle of the switching transistor, to protect the switching transistor from being subject to the excessively large current impact. The first current threshold may be set to a relatively large value, to avoid repeatedly reducing the duty cycle of the switching transistor, which may further affect a charging speed of the pre-charging circuit.

In a possible implementation, when the sampled current of the secondary-side circuit is greater than a second current threshold, the controller is configured to reduce the current duty cycle of the switching transistor. When the sampled current of the secondary-side circuit is greater than the second current threshold, the controller may reduce the current duty cycle of the switching transistor, to protect the switching transistor from being subject to the excessively large current impact.

In a possible implementation, when the current of the switching transistor of the primary-side circuit is greater than a first current threshold, the controller is configured to turn off the switching transistor in a current switching periodicity. After a short circuit or overload occurs, each time the current of the switching transistor of the primary-side circuit is greater than the first current threshold, the controller may reduce a current duty cycle of the switching transistor, to protect the switching transistor from being subject to the excessively large current impact.

In a possible implementation, when the sampled current of the secondary-side circuit is greater than the second current threshold in a plurality of periodicities of the switching transistor, the controller is configured to reduce the current duty cycle of the switching transistor.

When the sampled current of the secondary-side circuit is greater than the second current threshold in the plurality of periodicities of the switching transistor, the switching transistor has a risk of a failure due to over-temperature. In this case, the current duty cycle of the switching transistor is reduced, so that the switching transistor can be protected from being subject to the excessively large current impact, to avoid a failure of the switching transistor due to over-temperature, which may result in damage of a component inside the charging apparatus.

In a possible implementation, when the sampled current of the secondary-side circuit is greater than a second current threshold, and a voltage of a current sampling signal of the secondary-side circuit is less than a sampling signal voltage of the output voltage of the secondary-side circuit, the controller is configured to reduce the current duty cycle of the switching transistor. The voltage of the current sampling signal of the secondary-side circuit is compared with the sampling signal voltage of the output voltage of the secondary-side circuit. In this way, when the voltage of the current sampling signal of the secondary-side circuit is less than the sampling signal voltage of the output voltage of the secondary-side circuit, the controller reduces the current duty cycle of the switching transistor, to protect the switching transistor from being subject to the excessively large current impact.

In a possible implementation, the pre-charging circuitt includes a current loop module, a voltage loop module, and a combiner module. The current loop module is configured to generate a current loop signal based on the sampled current of the secondary-side circuit and a reference current. The voltage loop module is configured to generate a voltage loop signal based on the output voltage of the secondary-side circuit and a reference voltage. The combiner module is connected to the current loop module and the voltage loop module, and is configured to perform a MIN operation on the current loop signal and the voltage loop signal, and output a MIN result. The controller is configured to control the duty cycle of the switching transistor based on the current of the switching transistor of the primary-side circuit and the MIN result.

An output current of the secondary-side circuit is controlled by the current loop module, and the output voltage of the secondary-side circuit is controlled by the voltage loop module. The current loop module outputs the current loop signal, and the voltage loop module outputs the voltage loop signal. The combiner module performs the MIN operation on the current loop signal and the voltage loop signal, and outputs the MIN result to the controller. The controller controls the duty cycle of the switching transistor based on the current of the switching transistor of the current primary-side circuit and the MIN result.

In a possible implementation, the combiner module is specifically configured to: when a voltage of the current loop signal is less than a voltage of the voltage loop signal, output the MIN result based on the current loop signal; or when a voltage of the voltage loop signal is less than a voltage of the current loop signal, output the MIN result based on the voltage loop signal.

When the voltage of the current loop signal is less than the voltage of the voltage loop signal in a current control periodicity, the controller calculates a target duty cycle based on the current loop signal and the current of the switching transistor, to control the switching transistor to be turned on at the target duty cycle. When the voltage of the current loop signal is not less than the voltage of the voltage loop signal in a current control periodicity, the controller calculates a target duty cycle based on the voltage loop signal and the current of the switching transistor, to control the switching transistor to be turned on at the target duty cycle.

In a possible implementation, the current loop module includes a differential amplification unit and a base comparison unit. The differential amplification unit includes a differential amplifier, and the base comparison unit includes an operational amplifier and a loop adjustment module. The differential amplification unit is configured to differentially amplify the current sampling signal of the secondary-side circuit, and input a differentially amplified current sampling signal of the secondary-side circuit to the base comparison unit. A non-inverting input end of the operational amplifier is connected to a reference voltage, and an inverting input end of the operational amplifier receives the differentially amplified current sampling signal of the secondary-side circuit. The loop adjustment module is connected between the inverting input end of the operational amplifier and an output end of the operational amplifier, and the output end of the operational amplifier is connected to the combiner module. The operational amplifier is configured to generate the current loop signal based on the current sampling signal of the secondary-side circuit. The loop adjustment module is configured to adjust an operating state of the current loop module.

The differential amplifier is configured to amplify a differential signal, suppress common-mode noise, and differentially amplify the current sampling signal of the secondary-side circuit. The operational amplifier is configured to amplify a signal, and provide high input impedance and low output impedance. In addition, the operational amplifier is configured to generate the current loop signal based on the current sampling signal of the secondary-side circuit. In a current loop, the loop adjustment module is configured to control an output current of the current loop, so that the output current meets a specific reference current or target current value.

In a possible implementation, the loop adjustment module includes at least a first resistor, a second resistor, and a first capacitor. The first resistor is connected between the inverting input end of the operational amplifier and the combiner module, and the second resistor and the first capacitor are connected in series between the inverting input end of the operational amplifier and the combiner module.

In a possible implementation, the charging apparatus further includes a reference voltage generation circuit, including a Zener diode, a third resistor, and a fourth resistor. An anode of the Zener diode is grounded, the third resistor and the fourth resistor are connected in series, the third resistor and the fourth resistor that are connected in series are connected in parallel with the Zener diode, a reference end of the Zener diode is connected between the third resistor and the fourth resistor, and a cathode of the Zener diode outputs the reference voltage.

In a possible implementation, the pre-charging circuit is further configured to: in response to that a voltage of the direct current bus is greater than or equal to a specified voltage, output a pre-charging completion signal. The pre-charging completion signal indicates that the pre-charging circuit has completed pre-charging of the direct current bus.

In a possible implementation, the pre-charging circuit is further configured to: in response to that the voltage of the direct current bus is greater than or equal to the specified voltage, stop operating.

In a possible implementation, the primary-side circuit includes a diode D1, a diode D2, a diode D3, a diode D4, a capacitor C1, a primary-side winding, and the switching transistor. A positive electrode of the diode D1 and a negative electrode of the diode D2 are connected to a positive electrode of an alternating current power supply, a positive electrode of the diode D3 and a negative electrode of the diode D4 are connected to a negative electrode of the alternating current power supply, a negative electrode of the diode D1 and a negative electrode of the diode D3 are connected to one end of the capacitor C1, a positive electrode of the diode D2 and a positive electrode of the diode D4 are connected to the other end of the capacitor C1, and the primary-side winding and the switching transistor are connected in series and then connected in parallel with the capacitor C1. The secondary-side circuit includes a secondary-side winding, a diode D5, and a capacitor C2. The secondary-side winding and the diode D5 are connected in series and then connected in parallel with the capacitor C2, one end of the capacitor C2 is configured to connect to a negative electrode of the direct current bus, and the other end of the capacitor C2 is configured to connect to a positive electrode of the direct current bus.

In a possible implementation, the charging apparatus further includes a switching matrix. The switching matrix is connected to the DC/DC conversion circuit, and the switching matrix is configured to allocate and schedule an output power of the DC/DC conversion circuit, and correspondingly output the output power to at least one charging terminal.

According to a second aspect, this application provides a charging pile, including a charging apparatus and at least one charging terminal connected to the charging apparatus. Each charging terminal is configured to connect to an electric device. The charging apparatus includes an AC/DC conversion circuit, a direct current bus, a DC/DC conversion circuit, and a pre-charging circuit. The AC/DC conversion circuit and the DC/DC conversion circuit are connected through the direct current bus, and the pre-charging circuit is configured to charge the direct current bus before the AC/DC conversion circuit is turned on. The pre-charging circuit includes a primary-side circuit and a secondary-side circuit, the secondary-side circuit includes a current sampling resistor, and the current sampling resistor is configured to sample a current of the secondary-side circuit.

In a possible implementation, the pre-charging circuit further includes a controller, the primary-side circuit includes a switching transistor, and the controller controls a duty cycle of the switching transistor based on a current of the switching transistor of the primary-side circuit, a sampled current of the secondary-side circuit, and an output voltage of the secondary-side circuit.

In a possible implementation, when the current of the switching transistor of the primary-side circuit is greater than a first current threshold, the controller is configured to reduce a current duty cycle of the switching transistor.

In a possible implementation, when the current of the switching transistor of the primary-side circuit is greater than a first current threshold, the controller is configured to turn off the switching transistor in a current switching periodicity.

In a possible implementation, when the sampled current of the secondary-side circuit is greater than a second current threshold, the controller is configured to reduce the current duty cycle of the switching transistor.

In a possible implementation, when the sampled current of the secondary-side circuit is greater than the second current threshold in a plurality of periodicities of the switching transistor, the controller is configured to reduce the current duty cycle of the switching transistor.

In a possible implementation, when the sampled current of the secondary-side circuit is greater than a second current threshold, and a voltage of a current sampling signal of the secondary-side circuit is less than a sampling signal voltage of the output voltage of the secondary-side circuit, the controller is configured to reduce the current duty cycle of the switching transistor.

For technical effects that can be achieved in the second aspect, refer to descriptions of technical effects that can be achieved in the corresponding design solutions in the first aspect. Details are not described herein again in this application.

### BRIEF DESCRIPTION OF DRAWINGS

FIG. 1A is a diagram 1 of a structure of a charging apparatus;
FIG. 1B is a diagram 2 of a structure of a charging apparatus;
FIG. 1C is a diagram 3 of a structure of a charging apparatus;
FIG. 1D is a diagram 4 of a structure of a charging apparatus;
FIG. 2A is a diagram of a current of a switching transistor;
FIG. 2B is a diagram 1 of a current of a switching transistor and a sampled current of a secondary-side circuit;
FIG. 2C is a diagram 2 of a current of a switching transistor and a sampled current of a secondary-side circuit;
FIG. 3 is a diagram 5 of a structure of a charging apparatus;
FIG. 4 is a diagram of a structure of a current loop module;
FIG. 5 is a diagram of a structure of a loop adjustment module;
FIG. 6 is a diagram of a structure of a reference voltage generation circuit;
FIG. 7 is a diagram 6 of a structure of a charging apparatus; and
FIG. 8 is a diagram 7 of a structure of a charging apparatus;

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that, in the description of this application, "at least one" means one or more, and " a plurality of" means two or more. In view of this, in embodiments of this application, "a plurality of" may also be understood as "at least two". The term "and/or" describes an association relationship between associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects. In addition, it should be understood that, in the description of this application, terms such as "first" and " second" are merely used to distinguish the purpose of the description, but should not be understood as indicating or implying relative importance, or should not be understood as indicating or implying a sequence.

It should be noted that "connection" in embodiments of this application means an electrical connection, and a connection of two electrical components may be a direct or indirect connection between the two electrical components. For example, a connection between A and B may be either a direct connection between A and B, or an indirect connection between A and B through one or more other electrical components. For example, the connection between A and B may be that A and C are directly connected, C and B are directly connected, and A and B are connected through C.

Currently, new energy such as photovoltaic and energy storage is widely applied in a charging industry. If a photovoltaic apparatus or an energy storage apparatus needs to be superimposed in an existing charging system, energy of the photovoltaic apparatus or the energy storage apparatus can be converted into electrical energy that can be used for charging only after multi-level energy conversion is performed. To improve efficiency of the charging system and utilization of modules, the charging system may use a split-type structure of a shared direct current bus. Utilization of an alternating current/direct current conversion module in the structure is high. In the split-type structure, it is more beneficial to superimpose a photovoltaic apparatus or an energy storage apparatus. In addition, with this structure, a charging speed is also high. However, because the alternating current/direct current conversion module is a non-isolated converter, output capacitors of the alternating current/direct current conversion modules are connected in parallel, to form an MF-level capacitor. To reduce current impact of the charging system during startup, a pre-charging circuit needs to be added in the system, thereby pre-charging a high-voltage bus. In a conventional pre-charging circuit, resistors connected in series are used to reduce a startup current, to implement a pre-charging solution. Power consumption of the resistors is excessively high, and is not applicable to the split-type structure. In addition, a larger quantity of modules in a charging system indicates a higher power consumption requirement for pre-charging. Therefore, in the foregoing case, a flyback topology structure may be selected as a structure of the pre-charging circuit.

However, a power corresponding to a power scenario to which the flyback topology structure is usually applied is not very large, and operating conditions such as a short circuit and overload may occur in the charging system of the split-type structure of the shared direct current bus. Whether the flyback topology structure can effectively cope with the foregoing extreme operating conditions is a key to whether the flyback topology structure is applicable to a current application. Currently, when overload occurs, a CBC function of the flyback topology structure is triggered to protect an internal switching transistor of the structure. However, to ensure a charging speed of the pre-charging circuit, a quantity of times the CBC is triggered should not be excessively large. Therefore, a protection point corresponding to the CBC function is set at a high location. However, in a scenario in which repeated overload or a long-time short circuit occurs, the CBC function is inevitably triggered for a plurality of times. In this case, a current flowing through a switching transistor is excessively large, and the switching transistor is prone to a failure due to over-temperature caused by the excessively large current. In view of this, this application provides a charging apparatus and a charging pile to improve an overload protection function in a high-power charging scenario, so that a pre-charging circuit in the charging apparatus is not damaged under various extreme operating conditions.

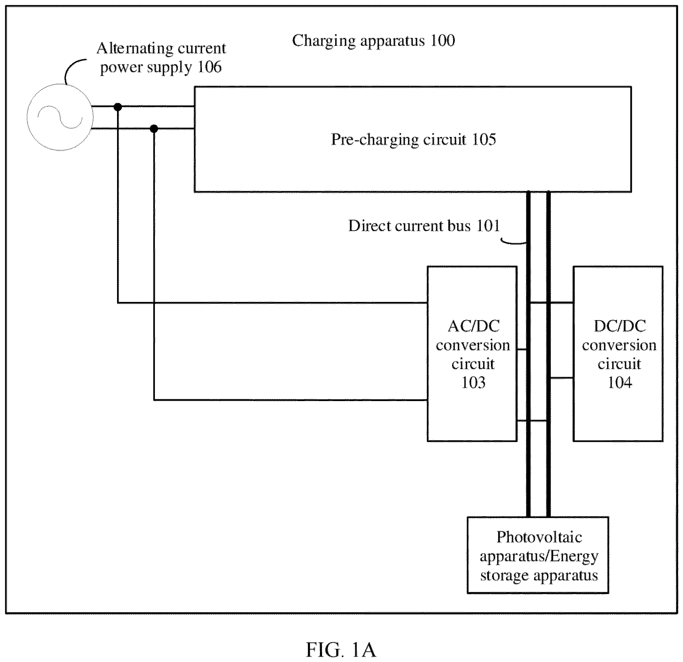

FIG. 1A is a diagram 1 of a structure of a charging apparatus. The charging apparatus 100 includes a direct current bus 101, an alternating current/direct current (alternating current/direct current, AC/DC) conversion circuit 103, a direct current/direct current (direct current/ direct current, DC/DC) conversion circuit 104, and a pre-charging circuit 105.

The pre-charging circuit 105 is connected to the direct current bus 101. An input end of the AC/DC conversion circuit 103 is configured to connect to an alternating current power supply 106, and an output end of the AC/DC conversion circuit 103 is connected to the direct current bus 101. An input end of the DC/DC conversion circuit 104 is connected to the direct current bus 101, and the input end of the DC/DC conversion circuit 104 is further connected to a photovoltaic apparatus or an energy storage apparatus through the direct current bus 101. The pre-charging circuit 105 is configured to connect to the alternating current power supply 106, and the pre-charging circuit 105 is configured to pre-charge the direct current bus 101.

The direct current bus 101 may include a positive electrode of the bus and a negative electrode of the bus. Optionally, a positive output end of the AC/DC conversion circuit 103 is connected to the positive electrode of the direct current bus, a negative output end of the AC/DC conversion circuit 103 is connected to the negative electrode of the direct current bus, a positive output end of the DC/DC conversion circuit 104 is connected to the positive electrode of the direct current bus, and a negative output end of the DC/DC conversion circuit 104 is connected to the negative electrode of the direct current bus.

The AC/DC conversion circuit 103 may be any one of a full-bridge rectification structure, a three-phase Vienna (Vienna) structure, and the like. Hardware of the AC/DC conversion circuit 103 may be implemented by using specific circuit components such as a resistor, a capacitor, and a switch. This should be known by a person skilled in the art.

The DC/DC conversion circuit 104 may be any one or more of a full-bridge LLC structure, a half-bridge LLC structure, a flyback converter, a buck conversion BUCK circuit, and a boost conversion BOOST circuit. Hardware of the DC/DC conversion circuit 104 may also be implemented by using specific circuit components such as a resistor, a capacitor, and a switch. This should be known by a person skilled in the art.

A specific structure of the photovoltaic apparatus in embodiments of this application is not limited, and may be any manner in which photovoltaic power generation can be implemented. Optionally, the photovoltaic apparatus includes at least one photovoltaic module. In this case, the input end of the DC/DC conversion circuit 104 is connected to the photovoltaic apparatus through the direct current bus 101. A specific structure of the energy storage apparatus is not limited in this application either, and may be any structure in which electrical energy can be stored. Optionally, the energy storage apparatus includes at least one battery or battery cluster, an energy storage converter, and the like.

The direct current bus 101 includes at least one capacitor component, and the capacitor component is configured to superimpose a photovoltaic apparatus or an energy storage apparatus, to receive a direct current voltage output by the photovoltaic apparatus or the energy storage apparatus, and input the direct current voltage to the DC/DC conversion circuit 104, thereby implementing superimposition of the photovoltaic apparatus and the energy storage apparatus in the charging apparatus 100.

An input of the alternating current power supply 106 is an alternating current voltage, and the alternating current voltage may be a single-phase input or a multi-phase input. The pre-charging circuit 105 may receive the single-phase input, and the AC/DC conversion circuit 103 may receive the single-phase input or the multi-phase input.

The pre-charging circuit 105 may perform processing such as rectification on the alternating current voltage input by the alternating current power supply 106, to obtain a direct current voltage, and pre-charge the direct current bus 101 by using the direct current voltage, thereby implementing pre-charging of the charging apparatus 100.

After the pre-charging circuit 105 charges the direct current bus 101, the AC/DC conversion circuit 103 and the DC/DC conversion circuit 104 in the charging apparatus 100 start to be turned on again, so that the AC/DC conversion circuit 103 can be effectively prevented from subject to large current impact, to ensure safety and reliability of the charging apparatus 100.

Similarly, the AC/DC conversion circuit 103 may also perform processing such as rectification on the alternating current voltage input by the alternating current power supply 106, to obtain a direct current voltage, and convert the direct current voltage into a direct current high voltage after the pre-charging circuit 105 completes pre-charging for the direct current bus 101.

After the pre-charging circuit 105 completes pre-charging for the direct current bus 101, the DC/DC conversion circuit 104 performs power conversion on a voltage (including an input of the AC/DC conversion circuit, an input of the photovoltaic apparatus, and an input of the energy storage apparatus) on the direct current bus 101, and outputs a voltage obtained through power conversion to a terminal device, to provide a charging voltage for the terminal device.

If a photovoltaic apparatus or an energy storage apparatus is superimposed in the charging apparatus 100 of this structure, only a single time of conversion needs to be performed on energy of the photovoltaic apparatus or the energy storage apparatus. Compared with existing multi-level energy conversion, energy conversion efficiency can be effectively improved.

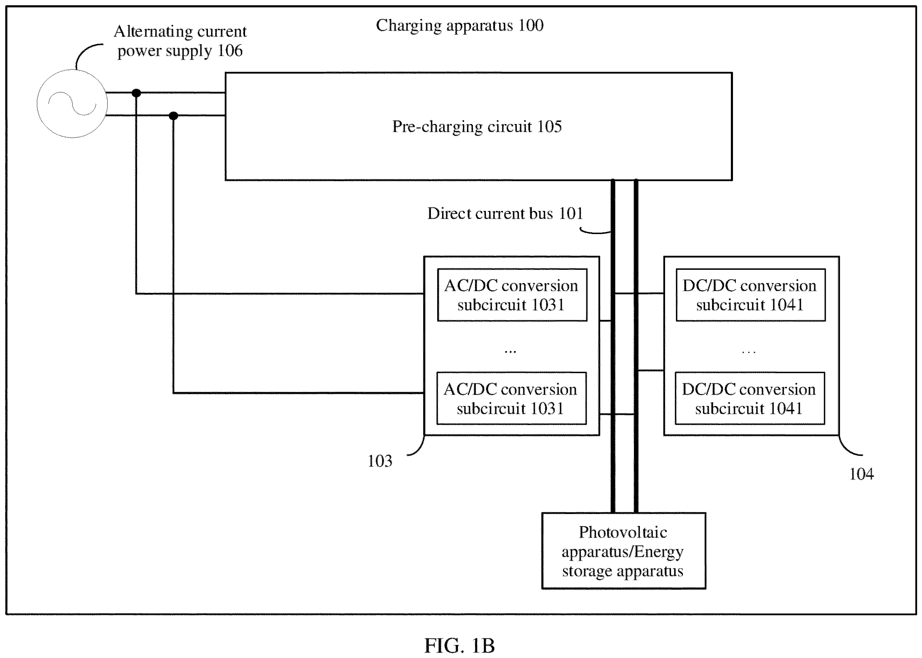

In addition, it should be noted that the AC/DC conversion circuit 103 and the DC/DC conversion circuit 104 in the charging apparatus 100 are functionally limited, and a quantity of modules inside the AC/DC conversion circuit 103 and the DC/DC conversion circuit 104 is not limited. The AC/DC conversion circuit 103 and the DC/DC conversion circuit 104 may include a plurality of subcircuits, respectively. For example, FIG. 1B is a diagram 2 of a structure of a charging apparatus. The AC/DC conversion circuit 103 includes at least one AC/DC conversion subcircuit 1031, and the DC/DC conversion circuit 104 includes at least one DC/DC conversion subcircuit 1041. In a case in which the AC/DC conversion subcircuit 1031 and the DC/DC conversion subcircuit 1041 are disposed in the charging apparatus 100, a plurality of circuits can be pre-charged through the pre-charging circuit 105. Compared with a technical solution in which a pre-charging circuit is separately disposed in each circuit, costs and a volume of the charging apparatus 100 can be effectively reduced.

In addition, quantities of the at least one AC/DC conversion subcircuit 1031 and the at least one DC/DC conversion subcircuit 1041 may be the same or different. Optionally, in the charging apparatus 100, the quantity of the at least one AC/DC conversion subcircuit 1031 is the same as the quantity of the at least one DC/DC conversion subcircuit 1041. Each DC/DC conversion subcircuit 1041 may receive a voltage output by the at least one AC/DC conversion subcircuit 1031, and perform corresponding power conversion.

Optionally, in the charging apparatus 100, the quantity of AC/DC conversion subcircuits 1031 is different from the quantity of DC/DC conversion subcircuits 1041. If one DC/DC conversion subcircuit 1041 and a plurality of AC/DC conversion subcircuits 1031 are included, the DC/DC conversion subcircuit 1041 may receive voltages output by the plurality of AC/DC conversion subcircuits 1031, and perform corresponding power conversion. In this way, a single DC/DC conversion circuit 104 may also implement high-power output, to meet a charging requirement in a high-power charging scenario.

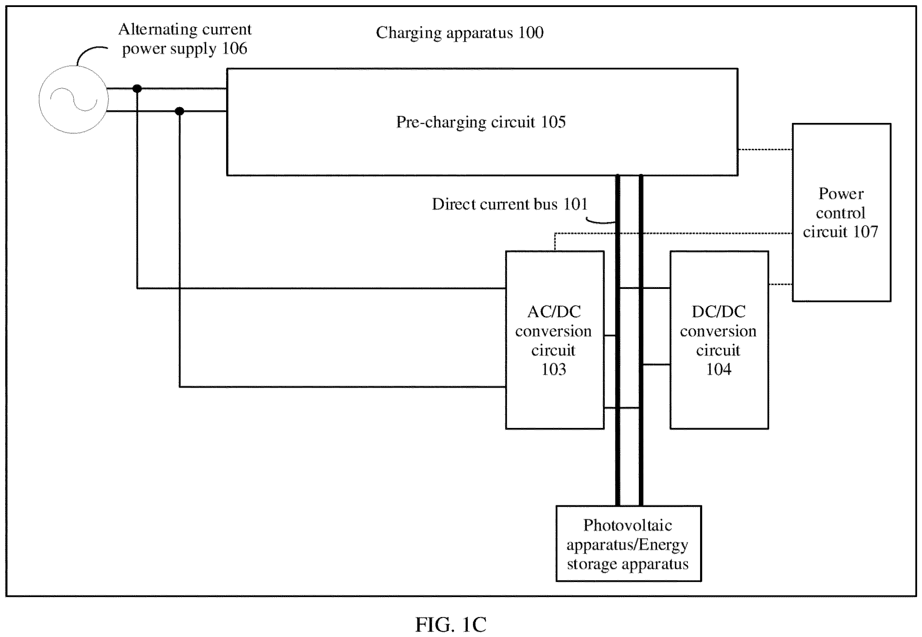

FIG. 1C is a diagram 3 of a structure of a charging apparatus. The charging apparatus 100 further includes a power control circuit 107, which is communicatively connected to the pre-charging circuit 105, the DC/DC conversion circuit 104, and the AC/DC conversion circuit 103, respectively, so that the power control circuit 107 may control the pre-charging circuit 105, the DC/DC conversion circuit 104, and the AC/DC conversion circuit 103 to be turned on or turned off, to implement pre-charging of the charging apparatus 100. The power control circuit 107 may communicate with and interact with the pre-charging circuit 105, the DC/DC conversion circuit 104, and the AC/DC conversion circuit 103 through a communication bus, so that the power control circuit 107 can control the pre-charging circuit 105, the DC/DC conversion circuit 104, and the AC/DC conversion circuit 103 through the communication bus.

Optionally, the power control circuit 107 may include a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. The processor may alternatively be a combination for implementing a computing function, for example, a combination of one or more microprocessors, or a combination of a DSP and a microprocessor.

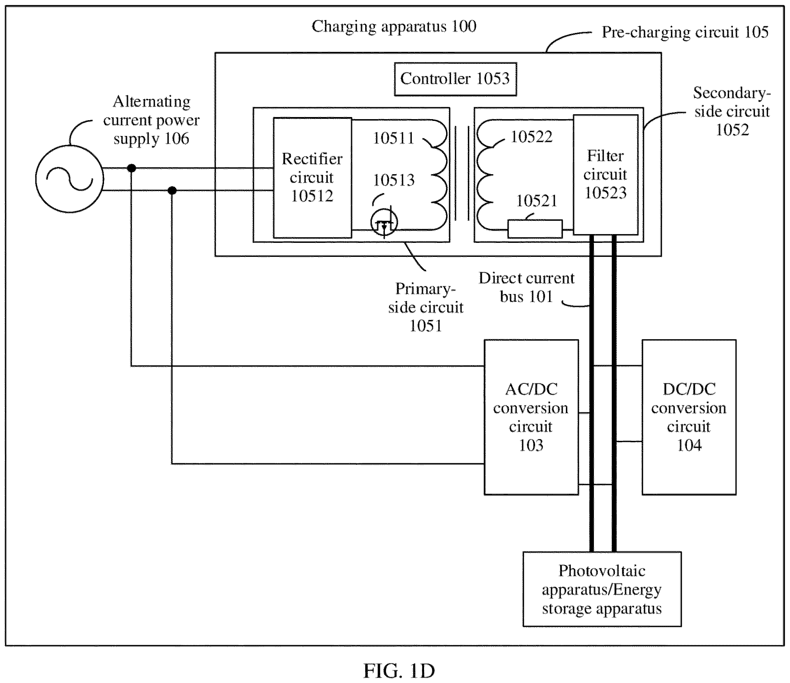

FIG. 1D is a diagram 4 of a structure of a charging apparatus. The pre-charging circuit 105 includes a primary-side circuit 1051 and a secondary-side circuit 1052. The secondary-side circuit 1052 includes a current sampling resistor 10521. The current sampling resistor 10521 is configured to sample a current of the secondary-side circuit 1052.

A manner of sampling the current of the secondary-side circuit 1052 by using the current sampling resistor 10521 is to connect the sampling resistor in series to a to-be-measured line. A voltage sensor is connected to two ends of the current sampling resistor 10521, and detects voltages at the two ends of the current sampling resistor 10521. A current of the to-be-measured line can be collected based on the voltages at the two ends of the current sampling resistor 10521 and a resistance value of the current sampling resistor 10521. A specific implementation is not described herein, and should be known by a person skilled in the art.

The pre-charging circuit 105 may further include a front-end switch (not shown in FIG. 1D), to control the pre-charging circuit 105 to be turned on or turned off by controlling the front-end switch to be turned on or turned off. The primary-side circuit 1051 may further include a primary-side winding 10511, a rectifier circuit 10512, and a switching transistor 10513. One end of the primary-side winding 10511 is configured to connect to the alternating current power supply 106.

The secondary-side circuit 1052 may further include a secondary-side winding 10522 and a filter circuit 10523. The primary-side winding 10511 and the secondary-side winding 10522 are coupled to each other, a transformer structure is formed through coupling of the primary-side winding 10511 and the secondary-side winding 10522, and the filter circuit 10523 is connected to the direct current bus 101, to perform power conversion on a voltage input by the alternating current power supply 106.

The current sampling resistor 10521 is connected between the secondary-side winding 10522 and the filter circuit 10523, and is configured to collect a current of the secondary-side circuit 1052. The current sampling resistor 10521 in the secondary-side circuit 1052 is used to detect the current of the secondary-side circuit 1052 in the pre-charging circuit 105. After a short circuit or overload occurs, the current of the secondary-side circuit 1052 exceeds a current threshold. Therefore, when the detected current of the secondary-side circuit 1052 exceeds the current threshold, a duty cycle of the switching transistor 10513 in the pre-charging circuit 105 may be controlled based on a sampled current of the secondary-side circuit 1052, to avoid a problem that the switching transistor 10513 fails due to over-temperature caused by an excessively large current flowing through the switching transistor 10513.

The pre-charging circuit 105 may further include a controller 1053. The controller 1053 may control the switching transistor 10513 to be turned on/turned off, so that the pre-charging circuit 105 pre-charges the direct current bus 101. In addition, a turn-on duty cycle of the switching transistor 10513 may be controlled, so that a charging power of the pre-charging circuit 105 can be controlled.

When a current of the switching transistor 10513 of the primary-side circuit 1051 is greater than a first current threshold, the controller 1053 reduces a current duty cycle of the switching transistor 10513. When a short circuit or overload occurs in the pre-charging circuit 105, the switching transistor 10513 needs to bear an impact current for a plurality of times. Therefore, the impact current borne by the switching transistor 10513 needs to be limited within a specific range.

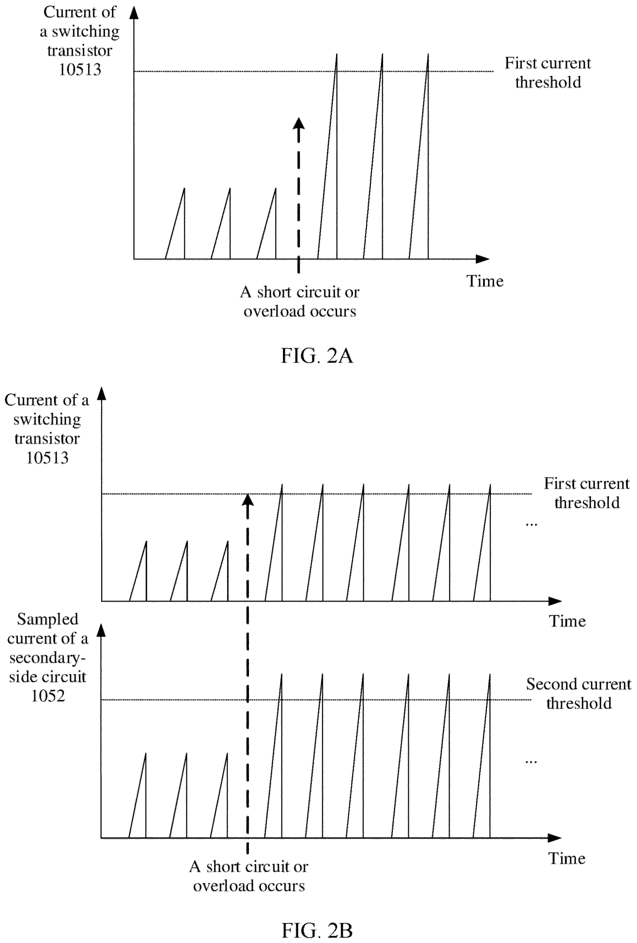

FIG. 2A is a diagram of a current of a switching transistor. It can be learned from FIG. 2A that, after a short circuit or overload occurs, each time the current of the switching transistor 10513 is greater than the first current threshold, the controller 1053 reduces the current duty cycle of the switching transistor 10513. In this way, the switching transistor 10513 can be protected from being subject to excessively large current impact.

In addition, in each switching periodicity of the switching transistor 10513, when the current of the switching transistor 10513 of the primary-side circuit 1051 is greater than the first current threshold, the switching transistor 10513 is turned off in the current switching periodicity. The switching transistor 10513 is turned on until a next periodicity of the switching transistor 10513. In this way, the switching transistor 10513 may also be protected from being subject to excessively large current impact.

In addition, to ensure a charging speed of the pre-charging circuit 105, the first current threshold is set to a relatively large value, to prevent the duty cycle of the switching transistor 10513 from being repeatedly reducing, which may affect the charging speed. To avoid a failure of the switching transistor 10513 due to excessively high power consumption and an excessively high temperature rise, detection of the current of the secondary-side circuit 1052 is added in this application. When the current of the switching transistor 10513 is greater than the first current threshold, correspondingly, the current of the secondary-side circuit 1052 is greater than a second current threshold. Therefore, when the sampled current of the secondary-side circuit 1052 is greater than the second current threshold, the controller 1053 is configured to reduce the current duty cycle of the switching transistor 10513.

In a case in which repeated overload occurs, or a short circuit occurs for a long time in the pre-charging circuit 105, the switching transistor 10513 is prone to a failure due to an excessively high temperature under the effect of impact currents for a plurality of times. Therefore, the current of the secondary-side circuit 1052 is detected, so that the controller 1053 controls the switching transistor 10513 to be turned on at a duty cycle less than a specified duty cycle, to reduce a conduction current of the switching transistor 10513, thereby preventing a failure of the switching transistor 10513 due to over-temperature.

When the sampled current of the secondary-side circuit 1052 is greater than the second current threshold in a plurality of periodicities of the switching transistor 10513, it indicates that the current of the switching transistor 10513 is greater than the first current threshold for a plurality of times. In this case, to prevent a failure of the switching transistor 10513 due to over-temperature, the controller 1053 controls the switching transistor 10513 to reduce the current duty cycle to reduce the conduction current of the switching transistor 10513, thereby preventing a failure of the switching transistor 10513 due to over-temperature.

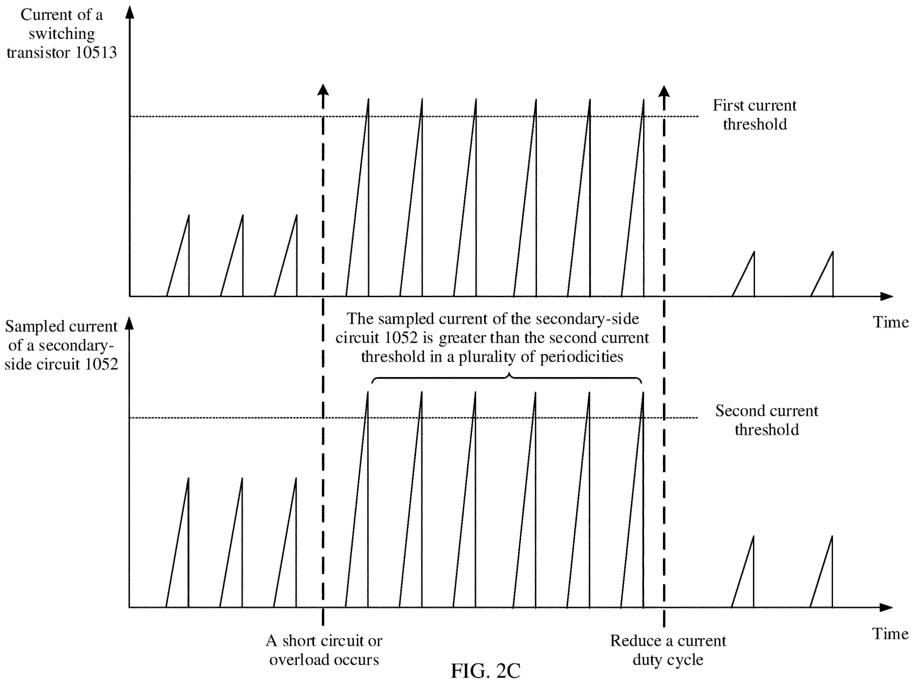

That the sampled current of the secondary-side circuit 1052 is greater than the second current threshold in the plurality of periodicities of the switching transistor 10513 may be understood as follows: The sampled current of the secondary-side circuit 1052 is greater than the second current threshold in each of the plurality of periodicities of the switching transistor 10513. FIG. 2B is a diagram 1 of a current of a switching transistor and a sampled current of a secondary-side circuit. It can be learned from FIG. 2B that, after a short circuit or overload occurs, the sampled current of the secondary-side circuit 1052 is greater than the second current threshold in a plurality of periodicities. FIG. 2C is a diagram 2 of a current of a switching transistor and a sampled current of a secondary-side circuit. It can be learned from FIG. 2C that, when the sampled current of the secondary-side circuit 1052 is greater than the second current threshold in a plurality of periodicities, the switching transistor 10513 is controlled to reduce a current duty cycle, so that the current of the switching transistor 10513 is significantly reduced.

In addition, that the sampled current of the secondary-side circuit 1052 is greater than the second current threshold in a plurality of periodicities of the switching transistor 10513 may also be understood as follows: The sampled current of the secondary-side circuit 1052 is greater than the second current threshold in at least two of the plurality of periodicities of the switching transistor 10513 . In this case, a temperature of the switching transistor 10513 also increases. The controller 1053 controls the switching transistor 10513 to reduce the current duty cycle, so that effect of limiting a current can also be achieved, thereby preventing a failure of the switching transistor 10513 due to over-temperature. Specifically, a condition for triggering the controller 1053 to control the switching transistor 10513 to reduce the current duty cycle may be specifically set, based on a temperature feature of the switching transistor 10513, by a person skilled in the art.

Optionally, when the sampled current of the secondary-side circuit 1052 is greater than a second current threshold, and a voltage of a current sampling signal of the secondary-side circuit 1052 is less than a sampling signal voltage of the output voltage of the secondary-side circuit 1052, the controller 1053 is configured to reduce the current duty cycle of the switching transistor 10513. In this way, effect of limiting a current can be achieved, to prevent a failure of the switching transistor 10513 due to over-temperature.

Optionally, when a temperature of the switching transistor 10513 is greater than a specified temperature threshold, the controller 1053 may also control the switching transistor 10513 to reduce the current duty cycle, to prevent a failure of the switching transistor 10513 due to over-temperature. The specified temperature threshold may be a value lower than a critical value of a failure temperature of the switching transistor 10513 . A person skilled in the art may set the temperature threshold separately based on different features of the switching transistor 10513. Details are not described herein.

Optionally, in response to that specified duration during which a short circuit or overload occurs in the pre-charging circuit 105 expires, the controller 1053 may also control the switching transistor 10513 to reduce the current duty cycle, to prevent a failure of the switching transistor 10513 due to over-temperature caused by large currents continuously flowing through the switching transistor 10513.

That the controller 1053 controls the switching transistor 10513 to be turned on at a duty cycle less than a specified duty cycle may be understood as enabling the switching transistor 10513 to work in a controllable pulse mode (BURST Mode) operating state. In this way, a quantity of turn-on times may be reduced at a constant frequency to increase the duty cycle to limit the current of the switching transistor 10513, thereby preventing a failure of the switching transistor 10513 due to over-temperature.

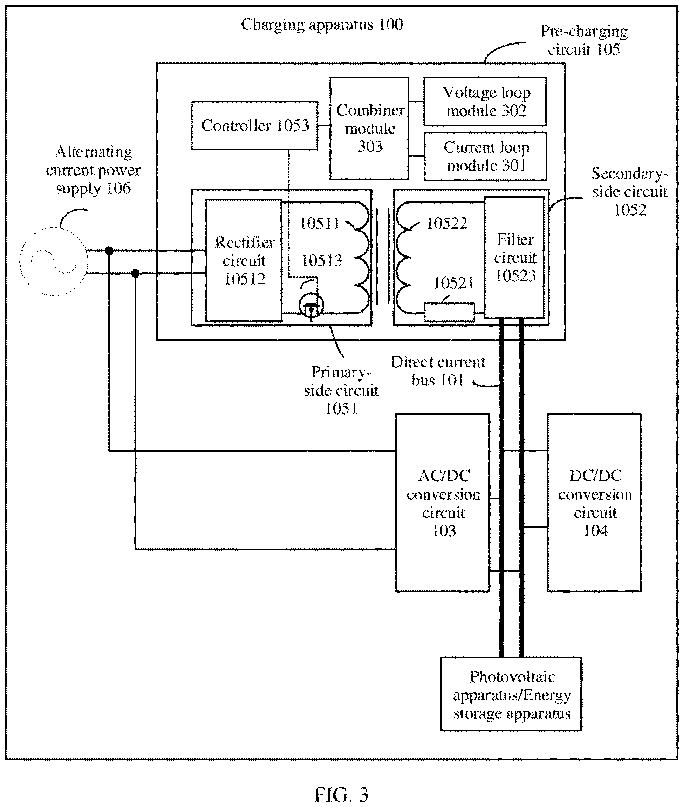

To control the switching transistor 10513 to be turned on at a duty cycle less than a specified duty cycle, refer to FIG. 3. FIG. 3 is a diagram 5 of a structure of a charging apparatus. The pre-charging circuit 105 further includes a current loop module 301, a voltage loop module 302, and a combiner module 303.

The current loop module 301 is configured to generate a current loop signal based on the sampled current of the secondary-side circuit 1052 and a reference current. The voltage loop module 302 is configured to generate a voltage loop signal based on an output voltage of the secondary-side circuit 1052 and a reference voltage. The combiner module 303 is connected to the current loop module 301 and the voltage loop module 302, and is configured to perform a MIN operation on the current loop signal and the voltage loop signal , and output a MIN result. The controller 1053 is configured to: when the sampled current of the secondary-side circuit 1052 is greater than the second current threshold in the plurality of periodicities of the switching transistor 10513, control the duty cycle of the switching transistor 10513 based on the MIN result.

An output current of the secondary-side circuit 1052 is controlled by the current loop module 301, and the output voltage of the secondary-side circuit 1052 is controlled by the voltage loop module 302. The current loop module 301 outputs the current loop signal, and the voltage loop module 302 outputs the voltage loop signal. The combiner module 303 performs the MIN (MIN) operation on the current loop signal and the voltage loop signal, and outputs the MIN result to the controller 1053. The controller 1053 controls, based on a current of the current switching transistor 10513 and the MIN result, the switching transistor 10513 to be turned on at a target duty cycle.

In this connection manner, there is a control loop in each control periodicity to control the switching transistor 10513, and the control loop is the current loop module 301 or the voltage loop module 302. In a possible implementation, the combiner module 303 is specifically configured to: when a voltage of the current loop signal is less than a voltage of the voltage loop signal, output the MIN result based on the current loop signal; or when a voltage of the voltage loop signal is less than a voltage of the current loop signal, output the MIN result based on the voltage loop signal.

When the voltage of the current loop signal is less than the voltage of the voltage loop signal in a current control periodicity, the controller 1053 controls the duty cycle of the switching transistor 10513 based on the current loop signal and the current of the switching transistor 10513. When the voltage of the current loop signal is not less than the voltage of the voltage loop signal in a current control periodicity, the controller 1053 controls the duty cycle of the switching transistor 10513 based on the voltage loop signal and the current of the switching transistor 10513.

Optionally, the combiner module 303 may input the signal to the controller 1053 via an optical coupler. In this way, the combiner module 303 and the controller 1053 transmit signals by using an optical fiber via the optical coupler. Therefore, the two modules can be effectively isolated, thereby avoiding problems such as electrical interference, noise, and current impact.

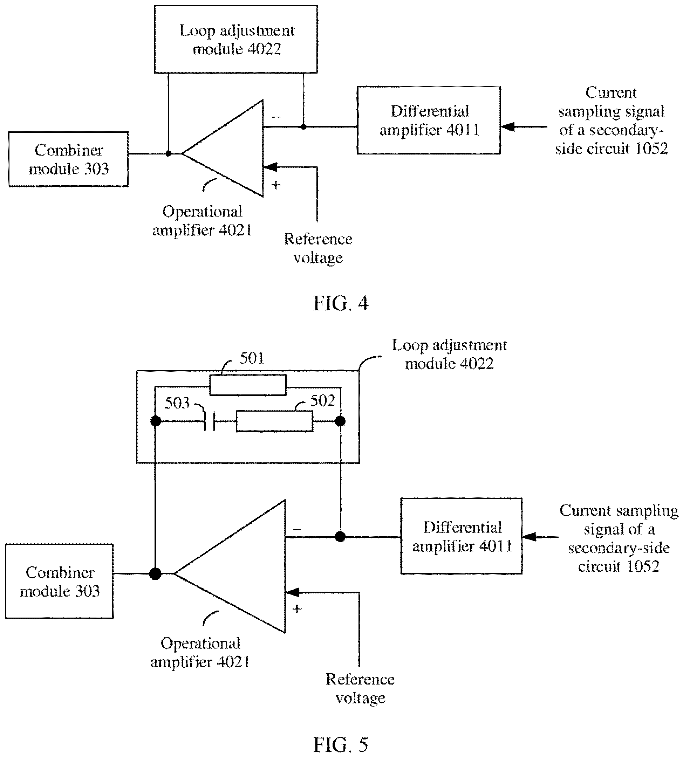

FIG. 4 is a diagram of a structure of a current loop module. In embodiments of this application, the current loop module 301 includes a differential amplification unit and a base comparison unit. The differential amplification unit includes a differential amplifier 4011, and the base comparison unit includes an operational amplifier 4021 and a loop adjustment module 4022. The differential amplification unit is configured to differentially amplify the current sampling signal of the secondary-side circuit 1052, and input a differentially amplified current sampling signal of the secondary-side circuit 1052 to the base comparison unit.

A non-inverting input end of the operational amplifier 4021 is connected to a reference voltage, an inverting input end of the operational amplifier 4021 receives the differentially amplified current sampling signal of the secondary-side circuit 1052, and an output end of the operational amplifier 4021 is connected to the combiner module 303. The operational amplifier 4021 is configured to generate the current loop signal based on the current sampling signal of the secondary-side circuit 1052. The loop adjustment module 4022 is configured to adjust an operating state of the current loop module 301.

The differential amplifier 4011 is configured to amplify a differential signal and suppress common-mode noise. Specifically, the differential amplifier 4011 differentially amplifies the current sampling signal of the secondary-side circuit 1052. The operational amplifier 4021 is configured to amplify a signal, and provide high input impedance and low output impedance. In addition, the operational amplifier 4021 is configured to generate the current loop signal based on the current sampling signal of the secondary-side circuit 1052. In a current loop, the loop adjustment module 4022 is configured to control an output current of the current loop, so that the output current meets a specific reference current or target current value.

FIG. 5 is a diagram of a structure of a loop adjustment module. In a possible implementation, the loop adjustment module 4022 includes at least a first resistor 501, a second resistor 502, and a first capacitor 503. The first resistor 501 is connected between the inverting input end of the operational amplifier 4021 and the combiner module 303, and the second resistor 502 and the first capacitor 503 are connected in series between the inverting input end of the operational amplifier 4021 and the combiner module 303.

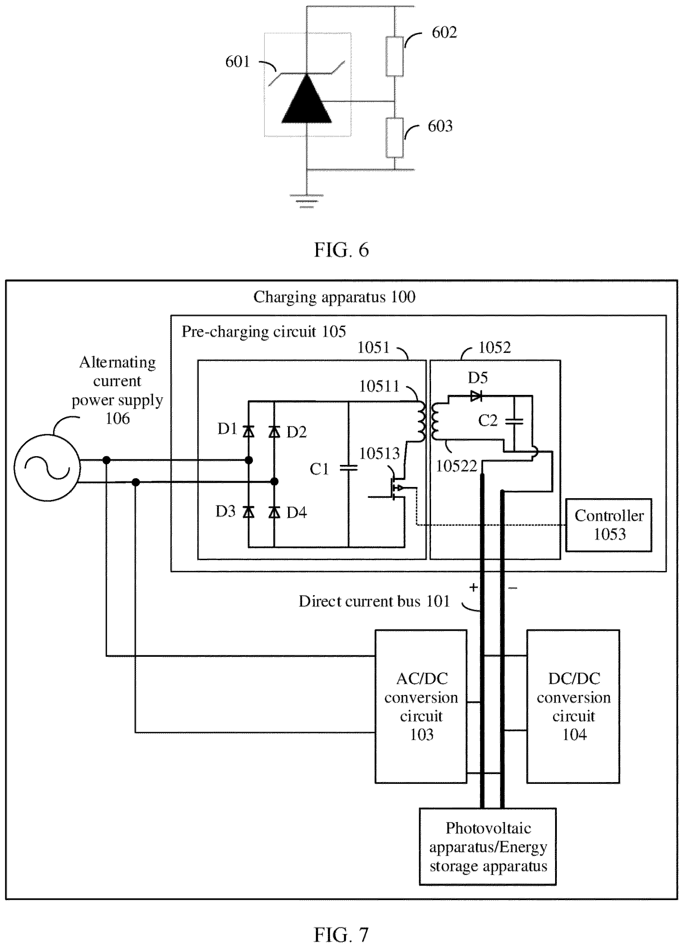

To enable a voltage loop to work normally to prevent a failure of the switching transistor 10513 due to excessively high power consumption and an excessively high temperature rise, refer to FIG. 6. FIG. 6 is a diagram of a structure of a reference voltage generation circuit. In a possible implementation, the charging apparatus 100 further includes a reference voltage generation circuit, including a Zener diode 601, a third resistor 602, and a fourth resistor 603. An anode of the Zener diode 601 is grounded, the third resistor 602 and the fourth resistor 603 are connected in series, the third resistor 602 and the fourth resistor 603 that are connected in series are connected in parallel with the Zener diode 601, a reference end of the Zener diode 601 is connected between the third resistor 602 and the fourth resistor 603, and a cathode of the Zener diode 601 outputs the reference voltage.

As a power management circuit, the voltage loop module 302 is configured to control and maintain a stable output voltage. The reference voltage is a base voltage in the voltage loop module 302, and is used to determine an output voltage and compare a difference between the output voltage and a specified value. The reference voltage is a base of the specified value. A value of the reference voltage is adjusted to control the output voltage of the voltage loop module 302 as well. When the output voltage is close to a specified value, a feedback mechanism of the voltage loop module 302 adjusts a control loop of the voltage loop module 302, so that the output voltage of the voltage loop module 302 remains at a stable level.

In addition, the voltage loop module 302 usually includes a comparator. The comparator is configured to compare the output voltage with the reference voltage. If the output voltage is greater than the reference voltage, the comparator outputs a signal to notify the controller 1053 of reducing the output voltage. Otherwise, if the output voltage is less than the reference voltage, the comparator outputs a signal to notify the controller 1053 of increasing the output voltage.

Further, in a possible implementation, the pre-charging circuit 105 is further configured to: in response to that a voltage of the direct current bus 101 is greater than or equal to a specified voltage, output a pre-charging completion signal. The pre-charging completion signal indicates that the pre-charging circuit 105 has completed pre-charging of the direct current bus 101. In this way, the controller 1053 and another module that receive the pre-charging completion signal may learn a charging condition of the direct current bus 101 of the charging apparatus 100. In addition, optionally, the pre-charging circuit 105 is further configured to: when the voltage of the direct current bus 101 is greater than or equal to the specified voltage, stop charging the direct current bus 101.

The following describes a specific implementation structure of the pre-charging circuit 105. FIG. 7 is a diagram 6 of a structure of a charging apparatus. In a possible implementation, the primary-side circuit 1051 includes a diode D1, a diode D2, a diode D3, a diode D4, a capacitor C1, the primary-side winding 10511, and the switching transistor 10513. A positive electrode of the diode D1 and a negative electrode of the diode D2 are connected to a positive electrode of the alternating current power supply 106, a positive electrode of the diode D3 and a negative electrode of the diode D4 are connected to a negative electrode of the alternating current power supply 106, a negative electrode of the diode D1 and a negative electrode of the diode D3 are connected to one end of the capacitor C1, a positive electrode of the diode D2 and a positive electrode of the diode D4 are connected to the other end of the capacitor C1, and the primary-side winding 10511 and the switching transistor 10513 are connected in series and then connected in parallel with the capacitor C1. The secondary-side circuit 1052 includes the secondary-side winding 10522, a diode D5, and a capacitor C2. The secondary-side winding and the diode D5 are connected in series and then connected in parallel with the capacitor C2. One end of the capacitor C2 is configured to connect to a negative electrode of the direct current bus 101, and the other end of the capacitor C2 is configured to connect to a positive electrode of the direct current bus 101.

The diode D1, the diode D2, the diode D3, the diode D4, the capacitor C1, the switching transistor 10513, and the primary-side winding 10511 form a primary-side conversion circuit, and the diode D5, the capacitor C2, and the secondary-side winding form a secondary-side conversion circuit, to perform power conversion on a voltage input to the pre-charging circuit 105. The controller 1053 may control turn-on or turn-off of the switching transistor 10513, to control a power conversion state.

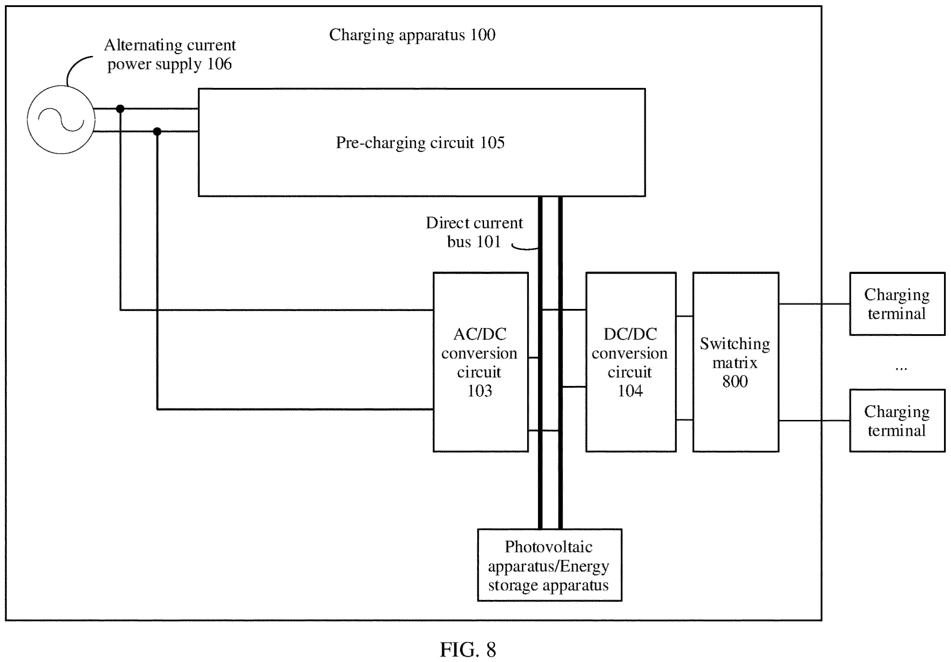

FIG. 8 is a diagram 7 of a structure of a charging apparatus. In a possible implementation, the charging apparatus 100 further includes a switching matrix 800. The switching matrix 800 is connected to the DC/DC conversion circuit 104, and the switching matrix 800 is configured to allocate and schedule an output power of the DC/DC conversion circuit 104, and correspondingly output the output power to at least one charging terminal.

It may be understood that a product form corresponding to the charging apparatus in the foregoing embodiments may be, for example, a charging pile or a charging device.

Based on a same concept, an embodiment of this application further provides a charging pile, including a charging apparatus and at least one charging terminal connected to the charging apparatus. Each charging terminal is configured to connect to an electric device. The charging apparatus includes an AC/DC conversion circuit, a direct current bus, a DC/DC conversion circuit, and a pre-charging circuit. The AC/DC conversion circuit and the DC/DC conversion circuit are connected through the direct current bus, and the pre-charging circuit is configured to charge the direct current bus before the AC/DC conversion circuit is turned on. The pre-charging circuit includes a primary-side circuit and a secondary-side circuit, the secondary-side circuit includes a current sampling resistor, and the current sampling resistor is configured to sample a current of the secondary-side circuit. The charging terminal is configured to perform information exchange and energy transmission with the electric device. For example, the charging terminal may be a charging connector, and the electric device may be an electric vehicle.

In a possible implementation, the pre-charging circuit further includes a controller, the primary-side circuit includes a switching transistor, and the controller controls a duty cycle of the switching transistor based on a current of the switching transistor of the primary-side circuit, a sampled current of the secondary-side circuit, and an output voltage of the secondary-side circuit.

In a possible implementation, when the current of the switching transistor of the primary-side circuit is greater than a first current threshold, the controller is configured to reduce a current duty cycle of the switching transistor.

In a possible implementation, when the current of the switching transistor of the primary-side circuit is greater than a first current threshold, the controller is configured to turn off the switching transistor in a current switching periodicity.

In a possible implementation, when the sampled current of the secondary-side circuit is greater than a second current threshold, the controller is configured to reduce the current duty cycle of the switching transistor.

In a possible implementation, when the sampled current of the secondary-side circuit is greater than the second current threshold in a plurality of periodicities of the switching transistor, the controller is configured to reduce the current duty cycle of the switching transistor.

In a possible implementation, when the sampled current of the secondary-side circuit is greater than a second current threshold, and a voltage of a current sampling signal of the secondary-side circuit is less than a sampling signal voltage of the output voltage of the secondary-side circuit, the controller is configured to reduce the current duty cycle of the switching transistor.

It is clear that, a person skilled in the art can make various modifications and variations to this application without departing from the scope of this application. This application is intended to cover these modifications and variations of this application provided that they fall within the scope of the claims of this application and an equivalent technology thereof.

## Claims

1. A charging apparatus, comprising an AC/DC conversion circuit, a direct current bus, a DC/DC conversion circuit, and a pre-charging circuit, wherein
the AC/DC conversion circuit and the DC/DC conversion circuit are connected through the direct current bus, and the pre-charging circuit is configured to charge the direct current bus before the AC/DC conversion circuit is turned on; and
the pre-charging circuit comprises a primary-side circuit and a secondary-side circuit, the secondary-side circuit comprises a current sampling resistor, and the current sampling resistor is configured to sample a current of the secondary-side circuit.

2. The charging apparatus according to claim 1, wherein the pre-charging circuit further comprises a controller, the primary-side circuit comprises a switching transistor, and the controller controls a duty cycle of the switching transistor based on a current of the switching transistor of the primary-side circuit, a sampled current of the secondary-side circuit, and an output voltage of the secondary-side circuit.

3. The charging apparatus according to claim 2, wherein when the current of the switching transistor of the primary-side circuit is greater than a first current threshold, the controller is configured to reduce a current duty cycle of the switching transistor.

4. The charging apparatus according to claim 2, wherein when the current of the switching transistor of the primary-side circuit is greater than a first current threshold, the controller is configured to turn off the switching transistor in a current switching periodicity.

5. The charging apparatus according to claim 2 or 3, wherein when the sampled current of the secondary-side circuit is greater than a second current threshold, the controller is configured to reduce the current duty cycle of the switching transistor.

6. The charging apparatus according to claim 5, wherein when the sampled current of the secondary-side circuit is greater than the second current threshold in a plurality of periodicities of the switching transistor, the controller is configured to reduce the current duty cycle of the switching transistor.

7. The charging apparatus according to claim 2 or 3, wherein when the sampled current of the secondary-side circuit is greater than a second current threshold, and a voltage of a current sampling signal of the secondary-side circuit is less than a sampling signal voltage of the output voltage of the secondary-side circuit, the controller is configured to reduce the current duty cycle of the switching transistor.

8. The charging apparatus according to any one of claims 1 to 7, wherein the primary-side circuit comprises a diode D1, a diode D2, a diode D3, a diode D4, a capacitor C1, a primary-side winding, and the switching transistor, wherein
a positive electrode of the diode D1 and a negative electrode of the diode D2 are connected to a positive electrode of an alternating current power supply, a positive electrode of the diode D3 and a negative electrode of the diode D4 are connected to a negative electrode of the alternating current power supply, a negative electrode of the diode D1 and a negative electrode of the diode D3 are connected to one end of the capacitor C1, a positive electrode of the diode D2 and a positive electrode of the diode D4 are connected to the other end of the capacitor C1, and the primary-side winding and the switching transistor are connected in series and then connected in parallel with the capacitor C1; and
the secondary-side circuit comprises a secondary-side winding, a diode D5, and a capacitor C2, wherein
the secondary-side winding and the diode D5 are connected in series and then connected in parallel with the capacitor C2, one end of the capacitor C2 is configured to connect to a negative electrode of the direct current bus, and the other end of the capacitor C2 is configured to connect to a positive electrode of the direct current bus.

9. The charging apparatus according to any one of claims 2 to 8, wherein the pre-charging circuit further comprises a current loop module, a voltage loop module, and a combiner module, wherein
the current loop module is configured to generate a current loop signal based on the sampled current of the secondary-side circuit and a reference current;
the voltage loop module is configured to generate a voltage loop signal based on the output voltage of the secondary-side circuit and a reference voltage;
the combiner module is connected to the current loop module and the voltage loop module, and is configured to perform a MIN operation on the current loop signal and the voltage loop signal, and output a MIN result; and
the controller is configured to control the duty cycle of the switching transistor based on the current of the switching transistor of the primary-side circuit and the MIN result.

10. The charging apparatus according to claim 9, wherein the combiner module is specifically configured to:
when a voltage of the current loop signal is less than a voltage of the voltage loop signal, output the MIN result based on the current loop signal; or
when a voltage of the voltage loop signal is less than a voltage of the current loop signal, output the MIN result based on the voltage loop signal.

11. The charging apparatus according to claim 9 or 10, wherein the current loop module comprises a differential amplification unit and a base comparison unit, the differential amplification unit comprises a differential amplifier, and the base comparison unit comprises an operational amplifier and a loop adjustment module, wherein the differential amplification unit is configured to differentially amplify the current sampling signal of the secondary-side circuit, and input a differentially amplified current sampling signal of the secondary-side circuit to the base comparison unit; a non-inverting input end of the operational amplifier is connected to a reference voltage, and an inverting input end of the operational amplifier receives the differentially amplified current sampling signal of the secondary-side circuit; the loop adjustment module is connected between the inverting input end of the operational amplifier and an output end of the operational amplifier, and the output end of the operational amplifier is connected to the combiner module; the operational amplifier is configured to generate the current loop signal based on the current sampling signal of the secondary-side circuit; and the loop adjustment module is configured to adjust an operating state of the current loop module.

12. The charging apparatus according to claim 11, wherein the loop adjustment module comprises a first resistor, a second resistor, and a first capacitor, the first resistor is connected between the inverting input end of the operational amplifier and the combiner module, and the second resistor and the first capacitor are connected in series between the inverting input end of the operational amplifier and the combiner module.

13. The charging apparatus according to any one of claims 1 to 12, wherein the charging apparatus further comprises a reference voltage generation circuit, comprising a Zener diode, a third resistor, and a fourth resistor, wherein an anode of the Zener diode is grounded, the third resistor and the fourth resistor are connected in series, the third resistor and the fourth resistor that are connected in series are connected in parallel with the Zener diode, a reference end of the Zener diode is connected between the third resistor and the fourth resistor, and a cathode of the Zener diode outputs the reference voltage.

14. The charging apparatus according to any one of claims 1 to 13, wherein the pre-charging circuit is further configured to:
when a voltage of the direct current bus is greater than or equal to a specified voltage, output a pre-charging completion signal, wherein the pre-charging completion signal indicates that the pre-charging circuit has completed pre-charging of the direct current bus.

15. A charging pile, comprising a charging apparatus and at least one charging terminal connected to the charging apparatus, wherein each charging terminal is configured to connect to an electric device, and the charging apparatus comprises an AC/DC conversion circuit, a direct current bus, a DC/DC conversion circuit, and a pre-charging circuit, wherein
the AC/DC conversion circuit and the DC/DC conversion circuit are connected through the direct current bus, and the pre-charging circuit is configured to charge the direct current bus before the AC/DC conversion circuit is turned on; and
the pre-charging circuit comprises a primary-side circuit and a secondary-side circuit, the secondary-side circuit comprises a current sampling resistor, and the current sampling resistor is configured to sample a current of the secondary-side circuit.
